(19) Europäisches Patentamt
European Patent Office
Office européen des brevets

(11) **EP 2 463 621 A1**

(12) **EUROPEAN PATENT APPLICATION**
published in accordance with Art. 153(4) EPC

(43) Date of publication:
**13.06.2012 Bulletin 2012/24**

(51) Int Cl.:
**G01C 3/06** (2006.01) **G06T 1/00** (2006.01)
**G08G 1/16** (2006.01)

(21) Application number: **10806257.1**

(22) Date of filing: **06.08.2010**

(86) International application number:
**PCT/JP2010/004977**

(87) International publication number:
**WO 2011/016257 (10.02.2011 Gazette 2011/06)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **06.08.2009 JP 2009183006**

(71) Applicant: **Panasonic Corporation**
**Kadoma-shi**
**Osaka 571-8501 (JP)**

(72) Inventor: **ICHIKAWA, Toru**
**Osaka-shi, Osaka 540-6207 (JP)**

(74) Representative: **Grünecker, Kinkeldey,**
**Stockmair & Schwanhäusser**
**Leopoldstrasse 4**
**80802 München (DE)**

(54) **DISTANCE CALCULATION DEVICE FOR VEHICLE**

(57) Provided is a distance calculation device for a vehicle, which can accurately calculate the distance to an object, for example, even when the sunshine condition in an image capture environment changes. In the device, an image quality estimation means (103) estimates the quality of an input image by analyzing an image of a vehicle region. An image quality adjustment means (104) adjusts the quality of the input image on the basis of the result of the estimation by the image quality estimation means (103). An object detection means (105) detects the object by processing the input image adjusted by the image quality adjustment means (104). A distance calculation means (106) calculates the distance to the object detected by the object detection means (105). The image quality adjustment means (104) adjusts the brightness of the input image.

101 — IMAGING SECTION
102 — VEHICLE AREA EXTRACTION SECTION
103 — IMAGE QUALITY ESTIMATION SECTION
104 — IMAGE QUALITY ADJUSTMENT SECTION
105 — OBJECT DETECTION SECTION
106 — DISTANCE CALCULATION SECTION

FIG.1

**Description**

Technical Field

The present invention relates to a distance calculation apparatus for a vehicle that calculates the distance to an object in surroundings of the vehicle using a vehicle-mounted camera.

Background Art

As a conventional distance calculation apparatus for a vehicle, there is an apparatus in which a camera is mounted on a vehicle, and the distance to an obstacle with which there is a risk of collision is detected from an image of the surroundings of the vehicle captured by this vehicle-mounted camera. Known examples of such an apparatus are a stereo-camera apparatus that calculates the distance to an obstacle using a plurality of cameras, and a single-camera apparatus that calculates the distance by means of only a single camera (see Patent Literature 1 and 2, for example).

Citation List

Patent Literature

PTL I
Japanese Patent Application Laid-Open NO. HEI 5-157557
PTL 2
Japanese Patent Application Laid-Open NO. 2005-030968

Summary of Invention

Technical Problem

However, there are the following kinds of problems with conventional distance calculation apparatuses for vehicles. First, with a stereo distance calculation apparatus having two cameras in line, such as illustrated in Patent Literature 1, the system configuration is large and complex, and furthermore high calibration precision is necessary between the two cameras, resulting in a problem of high system cost and vehicle mounting cost.

On the other hand, with a distance calculation apparatus that uses a single camera, distance is calculated using a point of contact between an object whose distance is measured (hereinafter referred to simply as "object") and the road surface, so that there is a problem of not being able to calculate a distance if a point of contact between an object and the road surface cannot be detected correctly due to the shadow of the object. In the conventional example illustrated in Patent Literature 2, this problem is dealt with by extracting a feature point present on the road surface and a feature point on an object in real space from an image captured by one camera, and calculating the distance to the object from time variation of the image positions of these feature points. By this means, measurement of the distance to an object is made possible even if a point of contact between the object and the road surface cannot be detected correctly. However, since a difference in pattern, coloration, or the like of a shaded part of an object and the road surface are used in detection of a feature point present on the road surface, there is a problem of not being able to calculate the distance to an object accurately when, for example, sunshine conditions in the imaging environment, the shadow of a structure, or the like, exert an influence, or when an object is similar in pattern, coloration, or the like, to the road surface.

It is therefore an object of the present invention to provide a distance calculation apparatus to solve a conventional problem and be able to calculate the distance to an object accurately even in a case such as when sunshine conditions in the imaging environment change, for example.

Solution to Problem

A distance calculation apparatus for a vehicle of the present invention has: an image quality estimation section that estimates the image quality of an input image by analyzing an image of a vehicle area; an image quality adjustment section that adjusts the image quality of an input image based on a result of estimation by the image quality estimation section; an object detection section that detects an object whose distance is measured by processing an input image adjusted by the image quality adjustment section; and a distance calculation section that calculates the distance to an object detected by the object detection section; wherein the image quality adjustment section adjusts the brightness of an input image.

Advantageous Effects of Invention

The present invention adjusts the image quality (brightness) of an input image based on image quality information for a vehicle area, enabling the distance to an object to be calculated accurately even in a case such as when sunshine conditions in the imaging environment change, for example.

Brief Description of Drawings

FIG.1 is a block diagram illustrating the configuration of a distance calculation apparatus for a vehicle according to an embodiment of the present invention;
FIG.2 illustrates an example of mounting positions on a vehicle of the imaging section illustrated in FIG.1;
FIG.3 is a flowchart explaining the operation of the image quality estimation section illustrated in FIG.1;
FIG.4 illustrates examples of brightness histograms of the image quality estimation section illustrated in FIG.1;
FIG.5 illustrates an example of the result of image quality adjustment by the image quality adjustment section illustrated in FIG.1;
FIG.6 is a flowchart explaining the operation of the object detection section illustrated in FZG.1;
FIG.7 illustrates an example of the result of edge extraction processing by the object detection section illustrated in FIG.1;
FIG.8 illustrates an example of a vanishing point of the object detection section illustrated in FIG.1; and
FIG.9 illustrates a distance calculation method used by the distance calculation section illustrated in FIG.1.

Description of Embodiment

Now, a distance calculation apparatus for a vehicle according to an embodiment of the present invention will be described in detail with reference to the accompanying drawings.

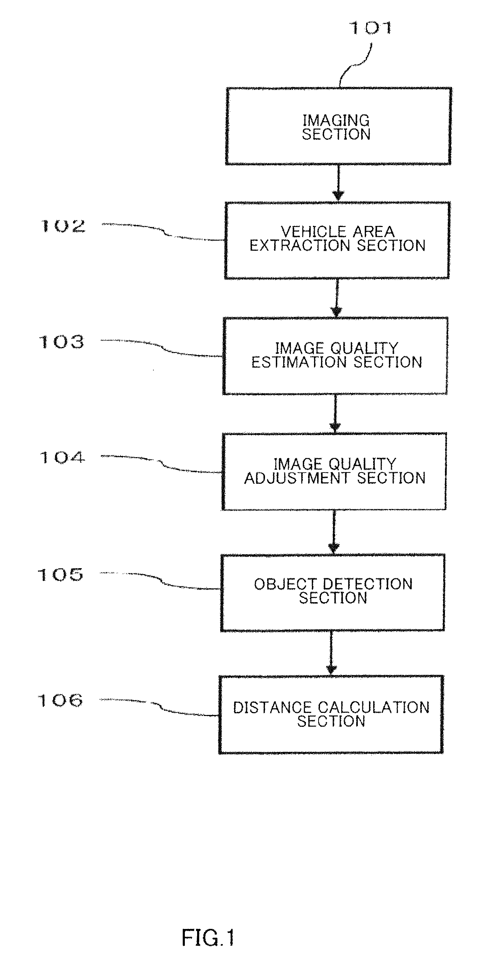

FIG.1 is a block diagram illustrating the configuration of a distance calculation apparatus for a vehicle according to an embodiment of the present invention.

In the distance calculation apparatus for a vehicle in FIG.1, imaging section 101 is installed in a predetermined position on a vehicle so that part of the vehicle is within the imaging range thereof, and images the vehicle and the surroundings of the vehicle. Vehicle area extraction section 102 extracts an area of the vehicle from an image (video) captured by imaging section 101. Image quality estimation section 103 estimates the image quality of an input image by analyzing an image of a vehicle area extracted by vehicle area extraction section 102. Image quality adjustment section 104 adjusts the image quality of the input image based on the result of estimation by image quality estimation section 103. Object detection section 105 detects an object by processing an input image adjusted by image quality adjustment section 104. Distance calculation section 106 calculates the distance to an object detected by object detection section 105.

The operation of a distance calculation apparatus for a vehicle configured as described above will now be explained.

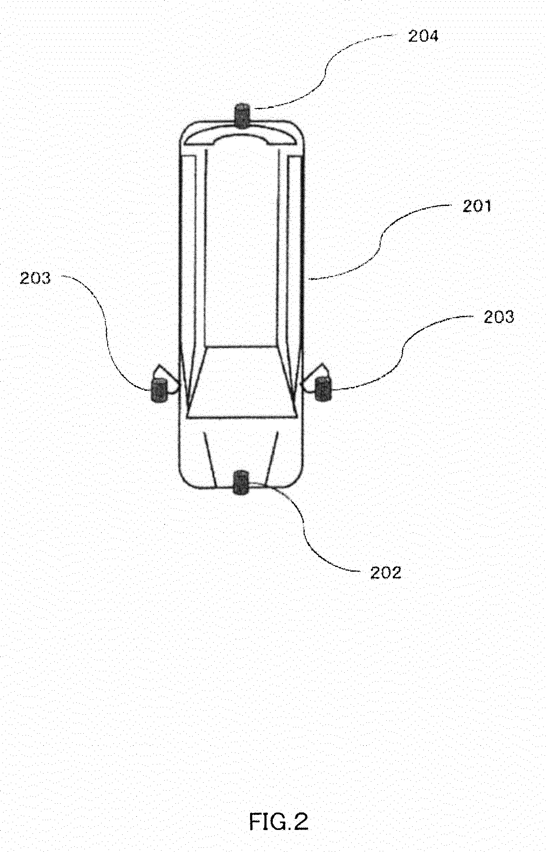

Imaging section 101 comprises CCD cameras, CMOS cameras, or the like, for example, as component devices. As illustrated in FIG.2, imaging section 101 includes, for example, front camera 202 that is mounted on the front of vehicle 201 (in the vicinity of the emblem, for example) and images the area ahead of the vehicle, a pair of side cameras 203 that are mounted on side mirrors and image the sides of the vehicle, rear camera 204 that is mounted on the rear of the vehicle (in the vicinity of the number plate or emblem, for example) or at the top of the vehicle and images the area to the rear of the vehicle, or the like. Cameras may also be mounted on the corners of the vehicle, on the back of the rear-view mirror, and so forth. Camera installation should allow adjustment of the position or angle to ensure that part of the vehicle is included in an image captured by that camera.

Vehicle area extraction section 102 performs processing that extracts only an area in which the vehicle is shown from within an image (video) captured by imaging section 101. Possible actual processing methods are a method whereby an image feature amount is detected and a vehicle part is extracted from within captured video, and a method whereby a specific position within a previously set video area is extracted as a vehicle area. With the former method, a vehicle area can be extracted correctly even in the case of a movable camera or when the relative positional relationship of the vehicle and a camera varies according to the driving conditions, but the time required for processing is a problem. Known body-color color information or a boundary edge line between the vehicle and the surrounding environment can be detected and used as an image feature amount. With the latter method, the positional relationship between a camera and the vehicle does not vary greatly in normal driving, and therefore it is sufficient to record the position of a vehicle area within captured video just once when camera installation is carried out.

image quality estimation section 103 estimates the image quality of an overall input image (video) by analyzing the image quality of a vehicle area extracted by vehicle area extraction section 102. An estimation section that uses a template will be described below as a specific example of image quality estimation section 103.

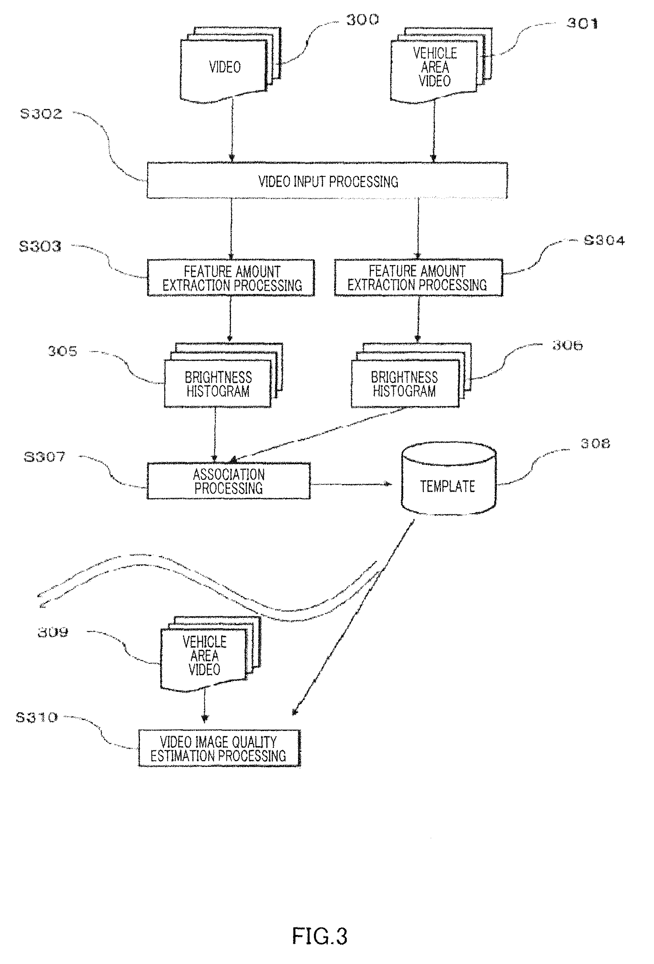

In FIG.3, first, step S302 inputs plurality of videos 300 for which the imaging environment differs and video of a vehicle area (vehicle area video) 301 extracted by vehicle area extraction section 102. Step S303 extracts a feature amount from a vehicle area input in step S302, and creates brightness histogram 305. Similarly, step S304 extracts a feature amount of all input video, and creates brightness histogram 306. Here, with regard to feature amount extraction in step S303, it is not necessary to perform processing uniformly on an entire input vehicle area, and the vehicle area may be divided, with feature amounts being extracted for the left side and right side of the vehicle respectively, for example. In step S307, association is performed by means of a notation method that represents a histogram characteristic simply, using an average, variance, or the like, for example, from brightness histograms 305 and 306, and template 308 is created. Image quality estimation section 103 stores created template 308 in memory or the like beforehand. As a feature amount extracted in step S303 and step S304, color information, contrast information, or the like may be used as well as a brightness histogram, and a plurality of combined feature amounts may also be used. Using template 308 created in this way, in step S310, template 308 is searched for in vehicle area video 309 input during system operation, and a result is returned with the nearest image quality data as the estimated image quality of the input video.

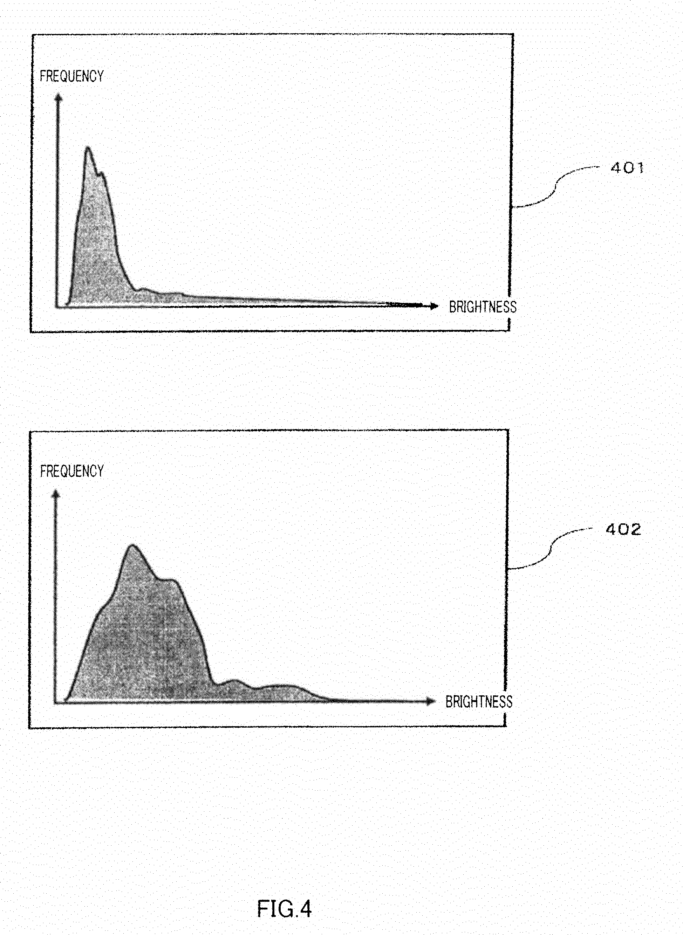

Image quality adjustment section 104 adjusts the image quality of the input image (video) so that processing in a subsequent step is executed optimally, based on estimated image quality information in the preceding step. An actual example of the adjustment method is illustrated in FIG.4. Here, it is assumed that the image quality of the input-image has brightness histogram 401 illustrated in the upper part of FIG.4 as the output result of image quality estimation section 103. In this video, brightness distribution is concentrated in a dark area, dark area contrast is not sufficiently secured, and distinguishing between an object in the video and the surrounding area is predicted to be difficult. Therefore, when the estimated image quality of input video is of this kind, gamma correction to give a gamma coefficient of 1 or above, for example, should be performed so that the contrast of an area of low brightness emerges clearly. Brightness histogram 402 in which the contrast of a low-brightness part has been increased by means of gamma correction is illustrated in the lower part of FIG.4. Conversely, if the brightness histogram of input video is skewed toward a high-brightness part, gamma correction is performed to give a gamma coefficient of 1 or below, and the contrast of a high-brightness part is increased. Tone curve correction or the like may also be used as an image quality adjustment method instead of gamma correction.

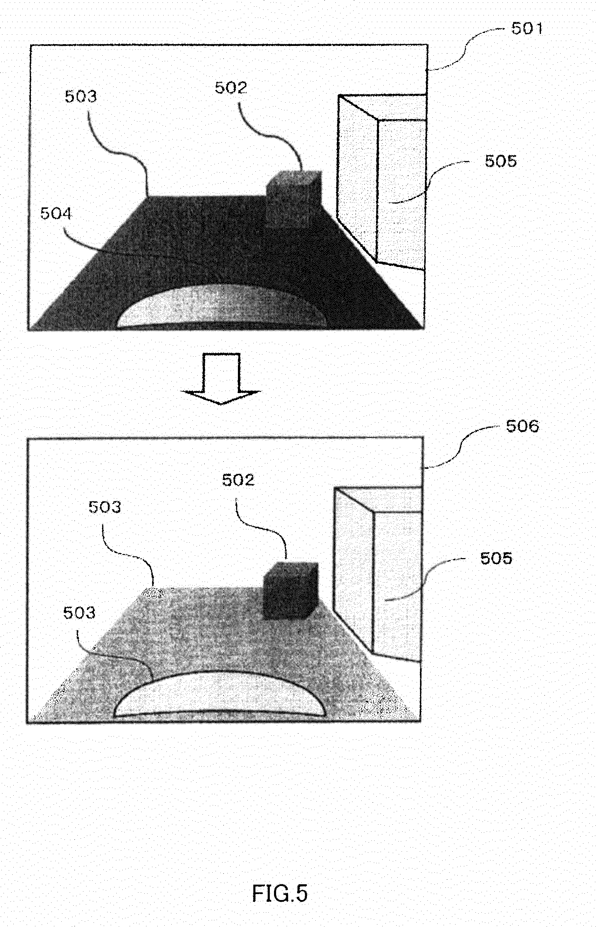

The operation of object detection section 105 will now be described using FIG.5. In FIG.5, reference code 501 indicates input video, 502 an obstacle subject to detection, 503 the road surface on which a vehicle runs, 504 a part of the vehicle included in the input video, and 505 another structure. When image quality is adjusted for this input video 501. by image quality adjustment section 104, the result is as illustrated in video 506. As a result, the variation in brightness at the boundary of detection object 502 and road surface 503 appears clearly.

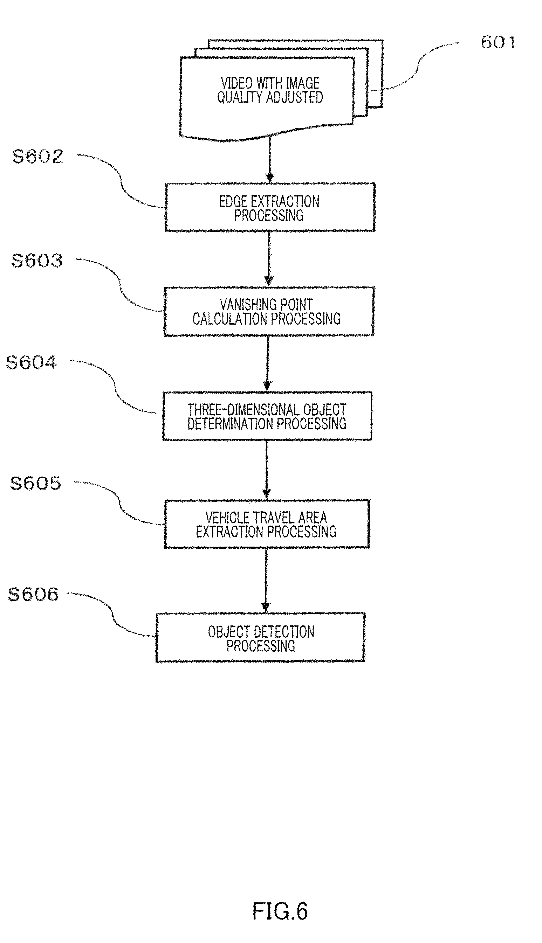

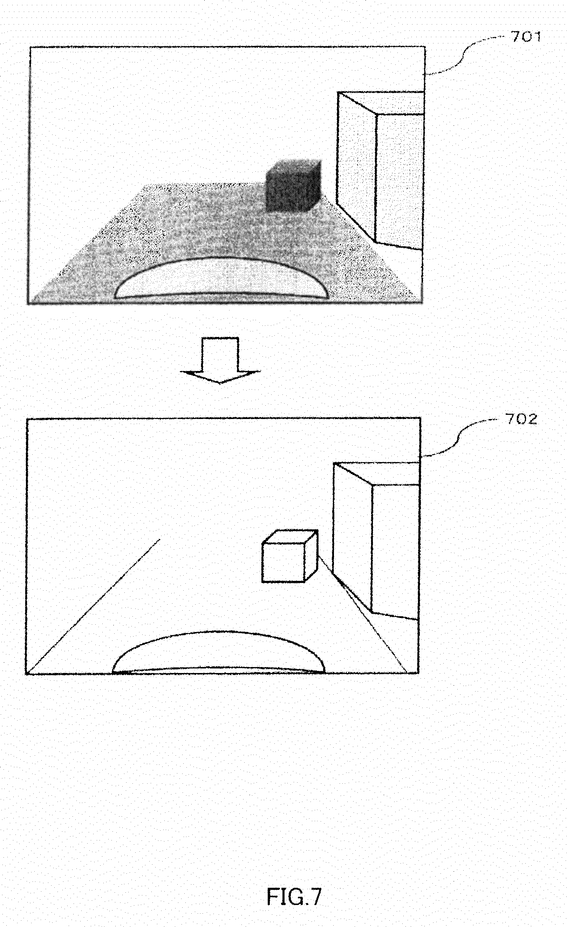

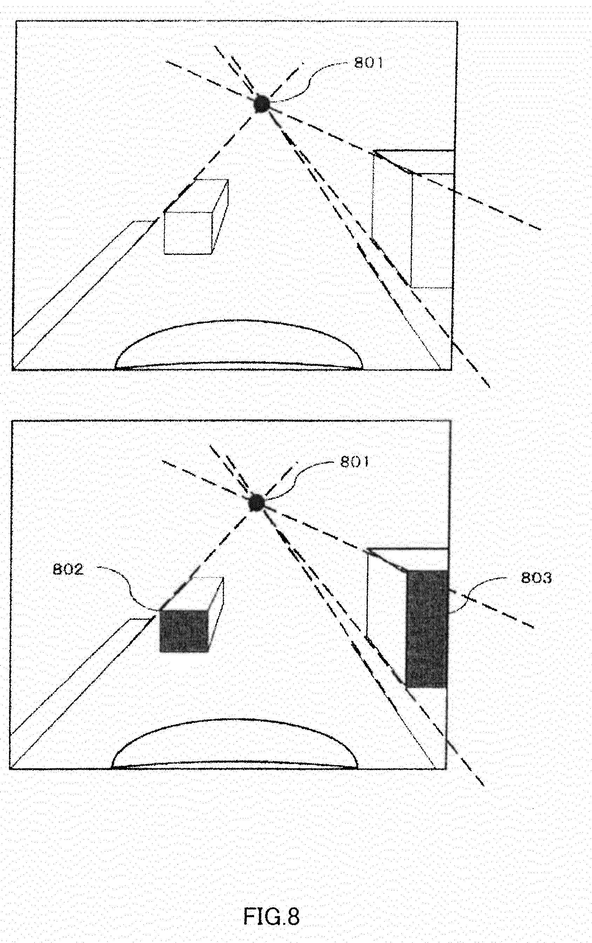

The actual operation of object detection section 105 will now be described using the flowchart in FIG.6. In initial step S602, edge extraction processing is performed with video 601 adjusted by image quality adjustment section 104 as input. A boundary part between a detection object and road surface, a white line on the road, or the like, is extracted by means of the edge extraction processing. A Sobel filter, Roberts filter, or the like, commonly used in image processing, can be used for edge extraction processing. A result of edge extraction processing is illustrated in FIG.7. In FIG.7, reference code 701 indicates an input image corresponding to video 506 after the image quality adjustment illustrated in FIG.5, and reference code 702 indicates the result of edge extraction processing performed on input video 701. Next, a vanishing point in the video is found in vanishing point calculation processing in step S603. A method of finding the vanishing point is, for example, to find straight lines that pass through edge points in the video by means of a Hough transform, and take the intersection point of those straight lines as the vanishing point 801, as illustrated in FIG.8. In three-dimensional object determination processing in step S604, by configuring a line or surface for which edges on straight lines passing through the vanishing point found in step S603 extend in a direction parallel to the forward traveling direction of the vehicle, surfaces that are formed only by straight lines that do not pass through the vanishing point can be determined to be three-dimensional objects 802 and 803 with which there is a possibility of collision that are perpendicular to the forward traveling direction of the vehicle. Next, in vehicle travel area extraction processing in step S605, an area that the vehicle will likely pass through within a certain time, within the vehicle's traveling lane or the like, for example, is restricted from within the video. Specifically, this can be implemented by estimating the vehicle's traveling lane using the vanishing point detected in step S603. Finally, in object detection processing in step S606, a three-dimensional object within the vehicle's traveling area is detected as an object with which there is a risk of collision from the step S603 and step S604 processing results.

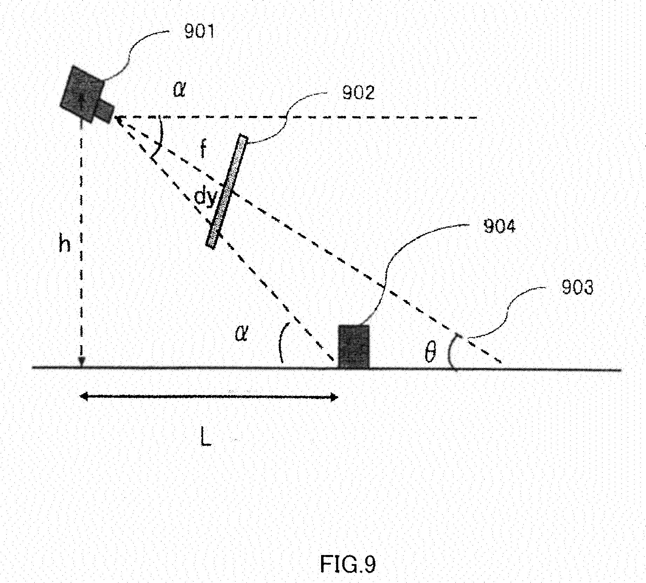

Lastly, distance calculation section 106 will be described using FIG.9. In FIG.9, reference code 901 indicates a camera installed on a vehicle at horizontal angle θ, 903 the optical axis of the camera, 902 the image projection plane of the camera, and 904 a detected object. Here, distance L from the camera (vehicle) to the object is found. From FIG. 9, following equation I applies for angle a formed by a straight line joining the camera and the object, and the road surface:

$$\tan(a)=h/L \quad \dots \text{(Equation 1)}$$

Also, using deviation amount dy between the position of an object illustrated on the image plane and the image center and camera focal length f, following equation 2 applies:

$$\tan(a-\theta)=dy/f \quad \dots \text{(Equation 2)}$$

From equation 2, following equation 3 is obtained:

$$\tan(a-\theta)=(\tan(a)-\tan(\theta))/(1+\tan(a)\tan(a)) \quad \dots \text{(Equation 3)}$$

When finding L from equation 1 and equation 3, following equation 4 applies:

$$L=h(f-\tan(\theta))/(dy+f\tan(\theta)) \quad \dots \text{(Equation 4)}$$

The distance to the object is calculated using this equation 4.

Thus, according to the present embodiment, it is possible to extract a vehicle area from captured video, and adjust the image quality of input video based on image quality information for the extracted area, so that it is possible to calculate the distance to an object accurately even in a case such as when sunshine conditions in the imaging environment change, for example.

The disclosure of Japanese Patent Application No.2009-183006, filed on August 6, 2009, including the specification, drawings and abstract, is incorporated herein by reference in its entirety.

Industrial Applicability

A distance calculation apparatus for a vehicle according to the present invention adjusts the image quality of an input image (video) based on image quality information for a vehicle area, thereby having an effect of enabling the distance to an object to be calculated accurately even in a case such as when sunlight conditions in the imaging environment change, for example, and is suitable for use as a distance calculation apparatus for a vehicle that calculates the distance to an obstacle in surroundings of the vehicle by means of a camera.

Reference Signs List

101    Imaging section
102    Vehicle area extraction section
103    Image quality estimation section
104    Image quality adjustment section
105    Object detection section
106    Distance calculation section

**Claims**

**1.**  A distance calculation apparatus for a vehicle comprising:

an image quality estimation section that estimates image quality of an input image by analyzing an image of the vehicle area;

an image quality adjustment section that adjusts the image quality of the input image based on a result of estimation by the image quality estimation section;

an object detection section that detects an object by processing the input image adjusted by the image quality adjustment section; and

a distance calculation section that calculates a distance to the object detected by the object detection section, wherein the image quality adjustment section adjusts brightness of the input image.

2. The distance calculation apparatus for the vehicle according to claim 1, further comprising:

an imaging section that is installed at a predetermined position of the vehicle so that part of the vehicle is within an imaging range thereof, and images the vehicle and surroundings of the vehicle; and

a vehicle area extraction section that extracts the vehicle area from the image captured by the imaging section.

**Amended claims under Art. 19.1 PCT**

**1.** Amended)

A distance calculation apparatus for a vehicle comprising:

a vehicle area extraction section that extracts a vehicle area from a captured image of surroundings of the vehicle, the captured image input by an imaging section;

an image quality estimation section that estimates image quality of an input image by analyzing an image of the vehicle area extracted by the vehicle area extraction section;

an image quality adjustment section that adjusts image quality of the input image based on a result of estimation by the image quality estimation section;

an object detection section that detects an object by processing the input image adjusted by the image quality adjustment section; and

a distance calculation section that calculates a distance to the object detected by the object detection section, wherein the image quality adjustment section adjusts brightness of the input image.

**2.** Amended)

The distance calculation apparatus for the vehicle according to claim 1, further comprising an imaging section that is installed at a predetermined position of the vehicle so that part of the vehicle is within an imaging range thereof, and images the vehicle and surroundings of the vehicle.

101

IMAGING
SECTION

102 VEHICLE AREA
EXTRACTION SECTION

103 IMAGE QUALITY
ESTIMATION SECTION

104 IMAGE QUALITY
ADJUSTMENT SECTION

105 OBJECT DETECTION
SECTION

106 DISTANCE CALCULATION
SECTION

FIG.1

FIG.2

FIG.3

FREQUENCY

BRIGHTNESS

401

FREQUENCY

BRIGHTNESS

402

FIG.4

FIG.5

601 — VIDEO WITH IMAGE
QUALITY ADJUSTED

S602 — EDGE EXTRACTION
PROCESSING

S603 — VANISHING POINT
CALCULATION PROCESSING

S604 — THREE-DIMENSIONAL OBJECT
DETERMINATION PROCESSING

S605 — VEHICLE TRAVEL AREA
EXTRACTION PROCESSING

S606 — OBJECT DETECTION
PROCESSING

FIG.6

701

702

FIG.7

FIG.8

FIG.9

## INTERNATIONAL SEARCH REPORT

International application No.

PCT/JP2010/004977

A. CLASSIFICATION OF SUBJECT MATTER
*G01C3/06*(2006.01)i, *G06T1/00*(2006.01)i, *G08G1/16*(2006.01)i

According to International Patent Classification (IPC) or to both national classification and IPC

B. FIELDS SEARCHED

Minimum documentation searched (classification system followed by classification symbols)
G01C3/00-3/32, G06T1/00-1/40;3/00-5/50;9/00-9/40, G08G1/00-99/00,
G01B11/00-11/30

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-240422 A (Fujitsu Ten Ltd.), 20 September 2007 (20.09.2007), entire text; fig. 1 to 8 (Family: none) | 1,2 |
| A | JP 2005-285011 A (Sumitomo Electric Industries, Ltd.), 13 October 2005 (13.10.2005), entire text; fig. 1 to 12 (Family: none) | 1,2 |
| A | JP 2007-96510 A (Omron Corp.), 12 April 2007 (12.04.2007), entire text; fig. 1 to 6 & US 2007/0073484 A1 & EP 1767960 A1 | 1,2 |

☒ Further documents are listed in the continuation of Box C.        ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 October, 2010 (20.10.10) | 02 November, 2010 (02.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/004977

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2007-243464 A　(Aisin AW Co., Ltd.),<br>20 September 2007 (20.09.2007),<br>entire text; fig. 1 to 26<br>(Family: none) | 1,2 |
| A | JP 2005-135203 A　(Hitachi, Ltd.),<br>26 May 2005 (26.05.2005),<br>entire text; fig. 1 to 5<br>(Family: none) | 1,2 |
| A | JP 2007-265281 A　(Denso IT Laboratory, Inc.),<br>11 October 2007 (11.10.2007),<br>entire text; fig. 1 to 7<br>(Family: none) | 1,2 |

Form PCT/ISA/210 (continuation of second sheet) (July 2009)

**EP 2 463 621 A1**

**Patent documents cited in the description**

- JP HEI5157557 B
- JP 2005030968 A
- JP 2009183006 A